# EUROPÄISCHE PATENTSCHRIFT

(11) **EP 1 406 040 B1**
(45) Veröffentlichungstag und Bekanntmachung des Hinweises auf die Patenterteilung: **18.04.2007**
(21) Anmeldenummer: 03027655.4
(22) Anmeldetag: 16.07.1999
(51) Int. Cl.: B01F 7/00, B01F 15/00, F16M 7/00

(54) **Unterbau für ein Tauchmotorrührwerk mit Rotorblättern**
Base for an immersed motor agitator with rotor blades
Bâti pour un agitateur à moteur submersible avec pales rotatives

(30) Priorität: 20.08.1998 DE 29814958 U
(43) Veröffentlichungstag der Anmeldung: 07.04.2004
(62) Teilanmeldung aus: 99113890.0
(73) Patentinhaber: ABS Pump Center GmbH, 53797 Lohmar (DE)
(72) Erfinder: Becker, Klaus, 51469 Bergisch Gladbach (DE); Dirla, Manfred, 51491 Overath (DE); Trimborn, Rolf, 53721 Siegburg (DE); Wasser, Wilfried, 53819 Neunkirchen (DE)
(74) Vertreter: Lippert, Stachow & Partner

(56) Entgegenhaltungen:
- DE-A- 2 121 342
- DE-A- 3 512 131
- DE-A1- 3 941 724
- DE-C1- 19 620 986
- US-A- 3 829 540
- US-A- 4 671 872
- US-A- 4 983 083
- US-A- 4 992 004

## Beschreibung

Die Erfindung betrifft einen Unterbau für ein Tauchmotorrührwerk mit Rotorblättern, insbesondere für den Einsatz in Misch- und Belebungsbecken oder Pumpensümpfen oder dergleichen, mit einer auf ein Beckenboden aufsetzbaren Unterseite und einer Oberseite, an der ein im wesentlichen vertikal verlaufendes, aus einem ersten Werkstoff bestehendes Führungselement für das Tauchmotorrührwerk befestigbar ist, wobei der Unterbau hoch genug ist, um bei Auflage des Tauchmotorrührwerks auf der Oberseite eine Berührung der Rotorblätter mit dem Beckenboden zu verhindern (US 4 671 872 A).

Derartige Unterbauten für Tauchmotorrührwerke sind in verschiedenen Ausführungsformen aus dem Stand der Technik bekannt. Die Unterbauten bestehen aus Stahlkonstruktionen, die aus miteinander verschweißten Profilen, z. B. Vierkant-Hohlprofilen gebildet sind. Diese Stahlkonstruktionen werden zum einen mit dem vorzugsweise als Führungsrohr ausgebildeten Führungselement für das Tauchmotorrührwerk verbunden und am gegenüberliegenden Ende des Unterbaus mit Schwerlastdübeln am Boden des Beckens befestigt.

In den Becken treten unregelmäßige Strömungen auf, so dass der Propeller des Tauchmotorrührwerks unregelmäßig angeströmt wird. Problematisch sind ferner die aufgrund des Gestells erzeugten Verwirbelungen. Diese unregelmäßige Anströmung und Verwirbelungen rufen Schwingungen innerhalb des Gestells hervor, so dass sowohl das Tauchmotorrührwerk als auch das Gestell überdurchschnittlich stark belastet werden. Diese Belastungen können schließlich zur Zerstörung des Gestells und des Tauchmotorrührwerks führen.

Der Erfindung liegt daher die Aufgabe zugrunde, einen Unterbau der eingangs genannten Art dahingehend zu verbessern, dass eine möglichst schwingungsarme Lagerung des Tauchmotorrührwerks ermöglicht wird.

Erfindungsgemäß wird diese Aufgabe dadurch gelöst, dass der Unterbau aus mindestens einem zweiten, von dem ersten Werkstoff unterschiedlichen Werkstoff gefertigt ist, der eine von dem ersten Werkstoff unterschiedliche Schwingungscharakteristik aufweist, um die von dem Rührwerk induzierten Schwingungen zu dämpfen.

Der erfindungsgemäß ausgebildete Unterbau wirkt damit als Schwingungsdämpfer, der die im Tauchmotorrührwerk und im Führungsrohr auftretenden Schwingungen aufnehmen kann, ohne zerstört zu werden. Der erfindungsgemäße Unterbau ist damit stabil und vibrationsfest. Darüber hinaus weist der erfindungsgemäße Unterbau den Vorteil auf, dass dieser den Wirkungsgrad des Tauchmotorrührwerks aufgrund der reduzierten Verwirbelungen verbessert. Eine Wirkungsgradverbesserung von bis zu 5 % ist realisierbar.

Strömungstechnisch besonders vorteilhaft ist es, wenn der Unterbau eine Form aufweist, die den Vordrall auf der Anströmseite des Tauchmotorrührwerks reduziert. Auf diese Weise werden insbesondere die zwischen den Rotorblättern und dem Unterbau auftretenden Turbulenzen unterbunden, die beim Vorbeistreichen der Rotorblätter an der Kante des Unterbaus auftreten.

Der Unterbau ist nahezu ideal starr und kostengünstig herzustellen, wenn er aus Beton gefertigt ist. Große Betonquerschnitte sind aufgrund der großen Auflagefläche und Masse darüber hinaus gut am Boden befestigbar.

Vorzugsweise ist der Unterbau einteilig ausgebildet.

Als besonders vorteilhaft hat sich dabei erwiesen, wenn der Unterbau im wesentlichen das Querschnittsprofil eines Tropfens oder einer Tragfläche, ähnlich der Tragfläche eines Flugzeugs, aufweist. Dabei wird der Unterbau, ebenso wie die Tragfläche eines Flugzeuges, derart im Becken angeordnet, dass er an dem halbkegelförmigen Ende durch das Wasser angeströmt wird. Das Wasser strömt um den Unterbau herum zu dem im wesentlichen spitz zulaufenden Ende des Unterbaus, an welchem die Rotorblätter des Tauchmotorrührwerks wirken. Im Gegensatz zu einer Flugzeugtragfläche soll jedoch der Querschnitt des Grundprofils des Unterbaus gemäß der Erfindung spiegelsymmetrisch zu einer Längsmittelebene ausgebildet sein, so dass bei Anströmung des in Strömungsrichtung vorderen halbkegelförmigen Endes keine Querkräfte erzeugt werden, wie dies bei einer Flugzeugtragfläche der Fall wäre, deren Profil auftrieberzeugend gestaltet ist und einen vom Anströmwinkel abhängigen Druckpunkt aufweist.

In einer alternativen Ausführungsform kann das spitz zulaufende Ende ferner mit einem nasenartigen Fortsatz versehen sein, der eine Umlenkung des den Unterbau umströmenden Wassers bewirkt.

Allgemein kann je nach den benötigten Strömungsverhältnissen der Unterbau entsprechend ausgestaltet werden, um die für diese Strömungsverhältnisse optimale Form aufzuweisen.

Als besonders vorteilhaft hat es sich erwiesen, den Unterbau in einer hochwertigen Betonqualität mit Stahlarmierung auszugestalten.

In einer Weiterentwicklung sind hochbelastbare Ankerschrauben zur Befestigung der Kupplungsmechanik für das Tauchmotorrührwerk in dem Unterbau eingegossen. Auf diese Weise ist eine Befestigung des Tauchmotorrührwerks und des Führungsrohres besonders einfach und schnell zu realisieren. Die Befestigung des Unterbaus auf dem Beckenboden erfolgt in einer bevorzugten Ausführungsform mit Schwerlastdübeln. Alternativ ist es hier auch denkbar, dass der Unterbau direkt an den Beckenboden angegossen oder eingegossen wird.

In einer alternativen Ausführungsform ist der Unterbau mehrteilig ausgeführt. Als fertigungstechnisch besonders einfach hat es sich erwiesen, wenn der Unterbau aus zwei Stützen mit kreisrundem Querschnitt besteht, die kolinear angeordnet sind. Die Fertigung dieser kreisrunden Stützen ist besonders einfach, da diese beispielsweise unter Verwendung von Abwasserrohren erfolgen kann. Zu diesem Zweck werden die Anker und die Stahlarmierungen in das Rohr eingesetzt und mit Beton gefüllt. Nach dem Aushärten des Betons kann das Rohr entfernt werden.

Um Verwirbelungen zwischen den Stützen zu vermeiden, kann in einer Weiterentwicklung die im Verhältnis zur Anströmung vorne gelegene Stütze einen größeren Durchmesser aufweisen als die zweite Stütze, die im Verhältnis zur ersten Stütze in Strömungsrichtung gelegen ist.

In einer Weiterentwicklung können zwischen den kreisrunden Stützen sich in Strömungsrichtung erstreckende Bleche angeordnet werden, um ein gleichmäßige Strömung zwischen den beiden Stützen zu erhalten. Auf diese Weise wird annähernd auch eine strömungstechnisch optimierte Tropfenform gebildet. So ist auch gewährleistet, dass die Strömung aufgrund von Turbulenzen zwischen den Stützen nicht abreißt.

Die Auflagefläche des Unterbaus auf dem Beckenboden kann ferner dadurch erhöht werden, dass der Unterbau an dessen Aufsetzfläche auf dem Beckenboden im Verhältnis zum restlichen Querschnitt verbreitert ist. In dem so gebildeten Bund, der einstückig an den Unterbau angegossen wird, können die Schwerlastdübel für die Bodenbefestigung angeordnet sein.

Der Sockel wirkt als Strömungsrichter und als Vordrallbrechung. Die Leistungserhöhung des Propellers erfolgt durch eine vordrallfreie und gerichtete Abströmung in Propellerrichtung, so dass eine turbulenzarme An- und Abströmung möglich ist. Die Kombination der Propellerform mit dem Sockel ergibt ein pulsationsarmes Vorbeigleiten der Rotorblätter am Sockel. Die gerichtete Abströmung reduziert die unzulässigen Schwingungen. Auf diese Weise werden die durch Stahlgestelle zusätzlich verursachten, unkollierten Strömungen im unmittelbaren Propellerbereich vermieden.

Die gerichtete Strömung bewirkt eine hohe Lebensdauer und Betriebssicherheit der Anlageteile.

Im Rahmen der der Erfindung zugrundeliegenden Aufgabe soll ebenso eine möglichst spielfreie Einleitung der von dem Unterbau aufzunehmenden dynamischen Kräfte gewährleistet sein. Es soll daher auch eine möglichst spielfreie Befestigung des Unterbaus auf dem Untergrund oder des Aufbaus, beispielsweise eines Leitrohrfußes, auf dem Unterbau gewährleistet sein.

Üblicherweise werden diese Teile mit Spreizankern oder Klebedübeln befestigt. Wie vorstehend bereits erwähnt wurde, erfolgt beispielsweise die Befestigung des Unterbaus auf dem zumeist aus Beton bestehenden Beckenboden mit Schwerlastdübeln. Hier können auch Verbundklebeanker mit einer aushärtbaren Mörtelmasse Anwendung finden. Die als Gewindestangen ausgeführten Ankerstangen werden in in dem Betonboden vorgesehene Sackbohrungen vermörtelt und durchsetzen beispielsweise die hierfür vorgesehenen Befestigungsbohrungen des Unterbaus. Bekannte Maßnahmen zur Sicherung des Unterbaus am Untergrund sind die Verschraubung der die Befestigungsbohrungen durchsetzenden Ankerstangen mittels selbstsichernden Muttern, Kronenmuttern mit Splint, Zahnscheiben, Fächerscheiben, Federringen, Sicherungsscheiben und dergleichen. Oftmals ist es nicht möglich, die Auflage des Unterbaus auf dem Betonboden vollflächig zu bewerkstelligen, so dass die zuvor beschriebenen Sicherungsmittel häufig ihre Vorspannung verlieren, was ein Lösen der Muttern zur Folge hat. Beispielsweise verlieren die Muttern ihre erforderliche Vorspannung, wenn sich örtlich begrenzte Auflagestellen am Beton wegscheuern.

Die Erfindung sieht daher einen Unterbau vor, der fußseitig über wenigstens einen Verbundklebeanker mit einer aushärtbaren Mörtelmasse auf einem Untergrund befestigt ist und/oder kopfseitig einen mit wenigstens einem Verbundklebeanker mit aushärtbarer Mörtelmasse befestigten Aufbau aufnimmt, wobei jeweils Ankerstangen der Verbundklebeanker in Ankerbohrungen des Untergrunds und/oder des Unterbaus eingesetzt sind und Befestigungsbohrungen des Unterbaus und/oder des Aufbaus durchsetzen, wobei sich der Unterbau dadurch auszeichnet, dass einer Vermörtelung der Ankerstangen sowohl in den Ankerbohrungen als auch in den Befestigungsbohrungen vorgesehen ist. Dadurch wird nicht nur eine stoffschlüssige Verbindung der betreffenden Ankerstange in der zugehörigen Ankerbohrung erzielt, sondern auch in der Befestigungsbohrung entweder des Unterbaus und/oder des Aufbaus.

Hierdurch wird zuverlässig verhindert, dass die für die sichere Befestigung von Muttern erforderliche Vorspannung verloren geht. Die Anzugskräfte werden bei der Verschraubung durch die stoffschlüssige Verbindung zwischen Mörtel und Befestigungsbohrung aufgenommen, so dass sich auch weiterhin der Vorteil ergibt, dass Brüche an dem zu befestigenden Bauteil im Bereich der Befestigungsbohrung vermieden werden.

Durch die stoffschlüssige Verbindung der Ankerstange mit dem Unterbau bzw. in den Befestigungsbohrungen des Unterbaus wird, abgesehen von der erzielten Sicherung der Verbindung, auch eine schwingungstechnisch besonders günstige Anbindung des Unterbaus an den Beckenboden erzielt, die dem Angießen des Unterbaus direkt an den Beckenboden sehr nahe kommt. Die Ableitung von rührwerksinduzierten Schwingungen in den Beckenboden wird hierdurch verbessert. Die Masse des Bauwerks (Beckens) wird aufgrund der teilweise stoffschlüssigen Verbindung zwischen Unterbau und Beckenboden mit in die Schwingungscharakteristik der gesamten Anordnung einbezogen.

Um zu gewährleisten, dass der Mörtel nicht durch die Fugen zwischen Unterbau und Aufbau und/oder Unterbau und Boden entweichen kann, ist es zweckmäßig, wenn die Fuge zwischen dem Unterbau und dem Untergrund und/oder zwischen dem Unterbau und dem Aufbau wenigstens im Bereich der Befestigungsbohrungen mit einer fließfähigen und aushärtbaren oder plastischen Masse abgedichtet sind, wobei diese Masse vorzugsweise vor Erstellung der Ankerbohrungen eingebracht wurde.

Bei einer besonders vorteilhaften Variante des Unterbaus gemäß der Erfindung sind die Befestigungsbohrungen zumindest teilweise hinterschnitten, so dass zusätzlich zu der stoffschlüssigen Verbindung des Mörtels mit der Wandung der Befestigungsbohrung auch eine formschlüssige Verankerung in Längsrichtung der Ankerstangen erzielt wird. Hierzu kann die betreffende Wandung der Befestigungsbohrung konisch oder mit einem zylindrisch erweiterten Durchmesser oder auch mit einem Gewinde versehen sein.

Die Erfindung ist in der Zeichnung dargestellt und im folgenden beispielhaft anhand der Figuren beschrieben. Es zeigen:
- Fig. 1: einen erfindungsgemäßen Unterbau in einteiliger Ausführungsform,
- Fig. 2: einen erfindungsgemäßen Unterbau in zweiteiliger Ausführungsform,
- Fig. 3: eine vergrößerte Darstellung des Unterbaus gemäß Fig. 1 mit abgesenktem Tauchmotorrührwerk,
- Fig. 4: einen Querschnitt durch eine der Stützen des Unterbaus gemäß Fig. 2,
- Fig. 5 und 6: Draufsichten verschiedener geometrischer Ausgestaltungen von Unterbauten in einteiliger Form und
- Fig. 7: eine schematische Schnittdarstellung der Befestigung beispielsweise des Unterbaus gemäß der Erfindung auf einem Betonuntergrund.

Wie aus den Figuren zu entnehmen ist, ist der Unterbau 1 auf dem Boden 2 des Beckens mit Befestigungsbolzen montiert. An dem in den Figuren oben gesehenen Ende ist ein als Leitrohr 3 ausgebildetes Leitsystem befestigt. An diesem Leitrohr 3 wird das in seiner Gesamtheit mit 4 gekennzeichnete Tauchmotorrührwerk 4 abgesenkt. In der Betriebsstellung liegt das Tauchmotorrührwerk 4 auf dem oberen Ende des Unterbaus auf. Der Unterbau 1 ist so hoch, dass die Rotorblätter des Tauchmotorrührwerks 4 in der vollständig abgesenkten Stellung nicht den Beckenboden 2 berühren können.

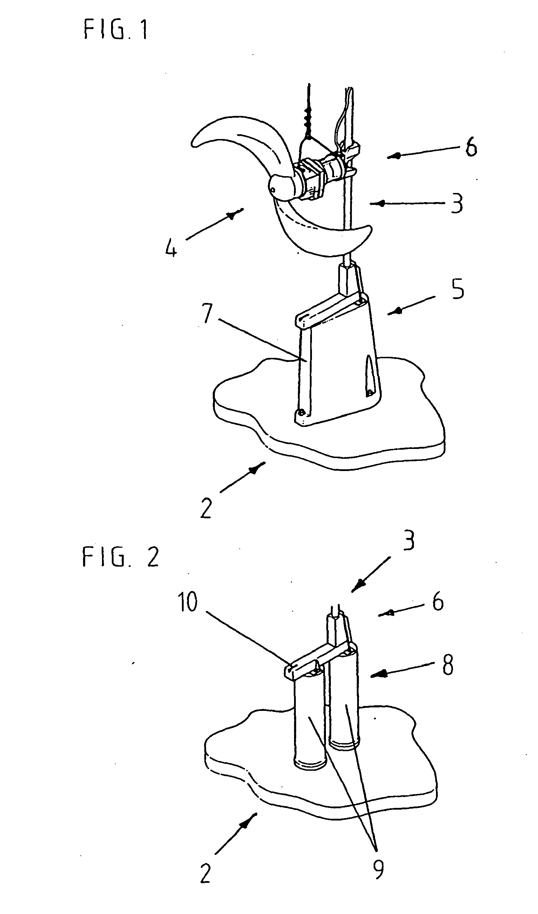

Die Fig. 1 stellt einen Unterbau in einteiliger Ausführungsform dar. Der Unterbau 5 weist im wesentlichen einen tropfenförmigen Querschnitt auf. Das halbkegelförmige Ende des Unterbaus 5 ist dabei in Richtung der Anströmseite im Becken angeordnet. Die Anströmung ist mit dem Pfeil 6 gekennzeichnet. Das spitz zulaufende Ende 7 ist strömungstechnisch so angeordnet, um den Vordrall auf der Anströmseite zu reduzieren, so dass die zwischen den Rotorblättern des Tauchmotorrührwerks und dem Unterbau 5 auftretenden Turbulenzen weitestgehend vermieden werden.

Die Fig. 2 stellt eine alternative Ausführungsform des erfindungsgemäßen Unterbaus dar, bei welchem der Unterbau 8 aus zwei Stützen 9 gebildet ist, die einen kreisrunden Querschnitt aufweisen. Diese Stützen 9 sind unter Verwendung von Rohren gegossen worden. Die z. B. aus PVC bestehenden Rohre können besonders einfach nach dem Eingießen des Betons entfernt werden. Ein auf der Oberseite der Stützen 9 angeordneter Querträger 10 überträgt die auf das Leitrohr 3 wirkenden Kräfte auf beide Stützen 9.

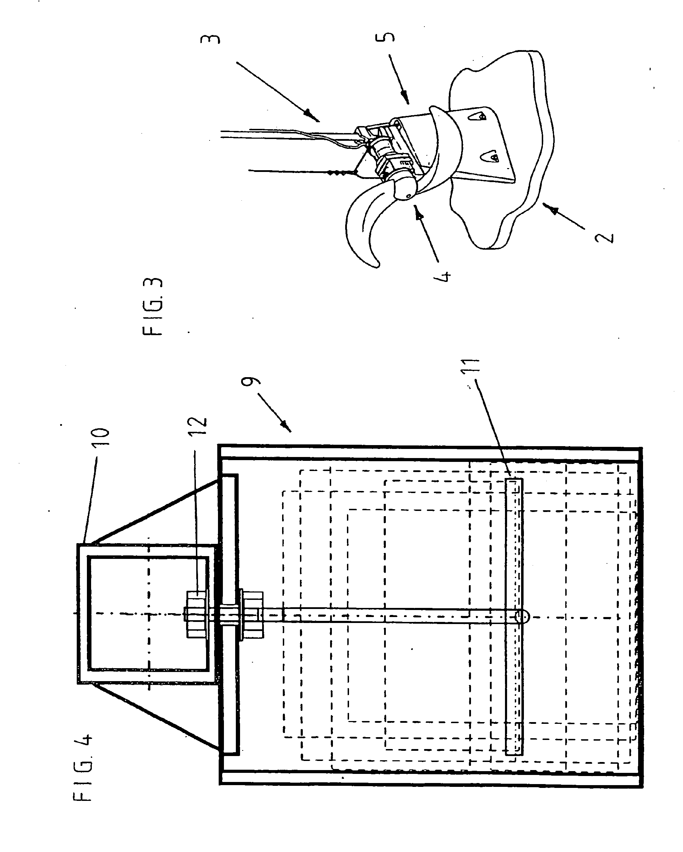

Die Montage des Querträgers 10 an der vorderen Stütze 9 ist besonders gut aus der Fig. 4 zu entnehmen. Innerhalb der Stütze 9 ist ein Stahlanker 11 eingegossen, der einen aus der Stütze 9 herausragenden Gewindebolzen 12 aufweist. An diesem Gewindebolzen ist über eine Mutter der Querträger 10 in bekannter Art und Weise befestigbar. Auf diese Weise läßt sich das Leitrohr 3 einfach wechseln durch Lösen der Muttern.

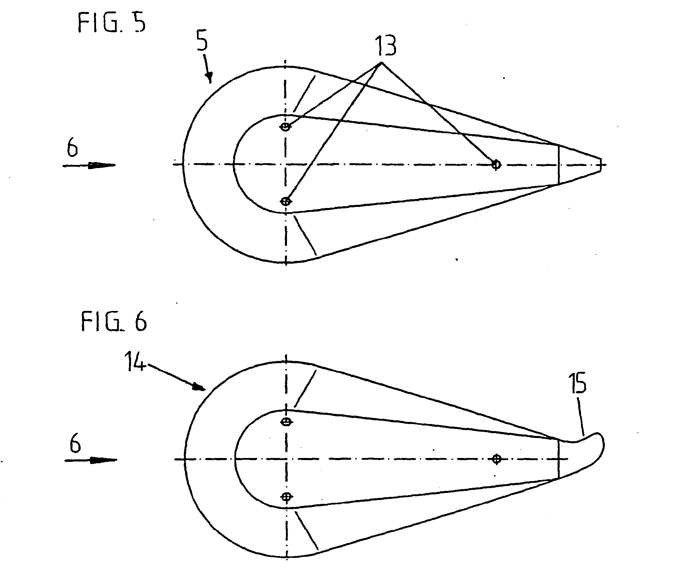

Die Fig. 5 und 6 stellen unterschiedlich ausgebildete Unterbauten von einstückigem Aufbau dar. In den Figuren ist das Tauchmotorrührwerk entfernt. Deutlich sind jedoch in allen Figuren die in dem Beton eingegossenen Gewindebolzen 13 sichtbar.

Die Fig. 6 stellt eine Ausführungsform dar, bei welcher das spitz zulaufende Ende des Unterbaus einen schräg zur Mittellängsachse des Unterbaus 14 verlaufende Nase 15 aufweist, die einstückig an dem Unterbau angegossen ist. Diese Nase 15 bewirkt eine entsprechende Umlenkung der Strömung. Durch geometrische Ausgestaltung der Nase können verschiedene Strömungsverhältnisse je nach Anwendungsfall realisiert werden.

Entscheidend sind die schwingungsdämpfenden Eigenschaften des Unterbaus. Dieser kann anstelle aus Beton auch beispielsweise aus Stahl gegossen sein.

Um vorwiegend die strömungstechnischen Probleme zu reduzieren betrifft die Erfindung ferner einen Unterbau für ein Tauchmotorrührwerk mit Rotorblättern, insbesondere für den Einsatz in Misch- und Belebungsbecken oder Pumpensümpfen oder dergleichen, mit einer auf ein Beckenboden aufsetzbaren Unterseite und einer Oberseite, an der ein im wesentlichen vertikal verlaufendes Führungselement für das Tauchmotorrührwerk befestigbar ist, wobei der Unterbau hoch genug ist, um bei Auflage des Tauchmotorrührwerks auf der Oberseite eine Berührung der Rotorblätter mit dem Beckenboden zu verhindern, der erfindungsgemäße so ausgebildet ist, dass der Unterbau eine strömungstechnisch günstige Form aufweist, um den Vordrall auf der Anströmseite des Tauchmotorrührwerks zu reduzieren.

Diese strömungstechnische Verbesserung kann beispielsweise dadurch auf einfache Weise erzielt werden, dass zwischen den Stahlrohren des Unterbaus aus dem Stand der Technik in Strömungsrichtung verlaufende Metallplatten befestigt werden.

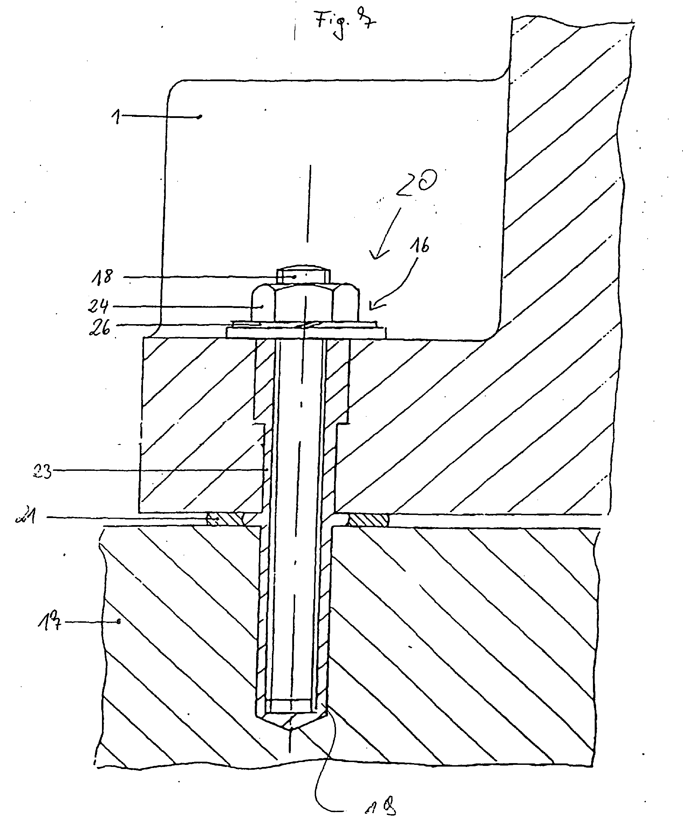

Wie dies aus Fig. 7 ersichtlich ist, kann der Unterbau 5 mittels Verbundklebeankern 16 am Boden 17 des Beckens 2 befestigt sein. Mit 18 ist eine Ankerstange bezeichnet, die vorzugsweise als Gewindestange ausgebildet ist und die in einer Ankerbohrung des Bodens 17 eingesetzt ist sowie eine Befestigungsbohrung 20 des Unterbaus 1 durchsetzt.

Mit 21 ist eine Ausgleichsmasse bezeichnet, die vor Erstellung der Ankerbohrung 19 in die Befestigungsbohrung 20 eingebracht wurde. Die Fließfähigkeit der Ausgleichsmasse wird so eingestellt, dass diese die Fuge 22 zwischen dem Unterbau 1 und dem Boden 17 ausfüllt. Wenn die Ausgleichsmasse dort aushärtet, ist die Fuge 22 abgedichtet und die Ankerbohrung 19 kann dann einen ununterbrochenen Ringraum bildend in die Befestigungsbohrung 20 übergehend niedergebracht werden.

Die Ausgleichsmasse 21 kann auch als plastische Masse unter Druck in die Befestigungsbohrung 20 eingebracht worden sein.

Nach Erstellung der Ankerbohrung 19 wird eine Mörtelpatrone in diese eingesetzt, beispielsweise in Form eines Mörtel und Härter enthaltenden Kunststoffschlauchs. Die Mörtelpatrone ist in ihrer Länge so gewählt, dass diese sowohl die Ankerbohrung 19 als auch die Befestigungsbohrung 20 ausfüllt. Durch Einbringen der Ankerstange 18 wird die Mörtelpatrone zerstört, so dass sich der Mörtel mit einem Härter mischt und eine Vermörtelung 23 der Ankerstange 18 über nahezu ihre gesamte Länge in der Ankerbohrung 19 als auch in der Befestigungsbohrung 20 erzielt wird. Der Unterbau 1 wird über die Ankerstange 18 mit einer Mutter 24 sowie mit einer Unterlegscheibe 25 und einem Sicherungsring 26 gegen den Boden 17 verschraubt.

### Bezugszeichenliste

- 1: Unterbau
- 2: Becken
- 3: Leitrohr
- 4: Tauchmotorrührwerk
- 5: Unterbau
- 6: Anströmung
- 7: spitz zulaufendes Ende des Unterbaus
- 8: Unterbau
- 9: Stütze
- 10: Querträger
- 11: Stahlanker
- 12: Gewindebolzen
- 13: Gewindebolzen
- 14: Unterbau
- 15: Nase
- 16: Verbundklebeanker
- 17: Boden
- 18: Ankerstange
- 19: Ankerbohrung
- 20: Befestigungsbohrung
- 21: Ausgleichsmasse
- 22: Fuge
- 23: Vermörtelung
- 24: Mutter
- 25: Unterlegscheibe
- 26: Sicherungsring

## Patentansprüche

1. Unterbau (5) für ein Tauchmotorrührwerk mit Rotorblättern, insbesondere für den Einsatz in Misch- und Belebungsbecken oder Pumpensümpfen oder dergleichen, mit einer auf einen Beckenboden aufsetzbaren Unterseite und einer Oberseite, an der ein im Wesentlichen vertikal verlaufendes Führungselement für das Tauchmotorrührwerk (4) befestigbar ist, wobei der Unterbau (5) hoch genug ist, um bei Auflage des Tauchmotorrührwerks (4) auf der Oberseite eine Berührung der Rotorblätter mit dem Beckenboden zu verhindern, wobei der Unterbau (5) fußseitig über wenigstens einen Verbundklebeanker (16) mit einer aushärtbaren Mörtelmasse an dem Untergrund befestigt ist und/oder kopfseitig einen mit wenigstens einem Verbundklebeanker (16) mit aushärtbarer Mörtelmasse befestigten Aufbau aufnimmt, wobei jeweils Ankerstangen (18) der Verbundklebeanker (16) in Ankerbohrungen (19) des Untergrunds und/oder des Unterbaus (5) eingesetzt sind und Befestigungsbohrungen (20) des Unterbaus (5) und/oder des Aufbaus durchsetzen, **dadurch gekennzeichnet, dass** eine Vermörtelung (23) der Ankerstangen (18) sowohl in den Ankerbohrungen (19) als auch in den Befestigungsbohrungen (20) vorgesehen ist.

2. Unterbau nach Anspruch 2, **dadurch gekennzeichnet, dass** die Fuge (22) zwischen dem Unterbau (1) und dem Untergrund und/oder zwischen dem Untergrund und dem Aufbau wenigstens im Bereich der Befestigungsbohrungen (20) mit einer fließfähigen und aushärtbaren oder plastischen Masse abgedichtet sind, wobei diese Masse vorzugsweise vor Erstellung der Ankerbohrung (19) eingebracht wurde.

3. Unterbau nach einem der Ansprüche 1 oder 2, **dadurch gekennzeichnet, dass** die Befestigungsbohrungen (20) zumindest teilweise hinterschnitten sind.

## Claims

1. A base (5) for a submersible motor agitator with rotor blades, especially for use in mixing and aeration tanks or pump sumps or the like, with an underside which is placeable on a tank bottom and with an upper side to which a substantially vertically extending guide member for the submersible motor agitator (4) is fixable, wherein the base (5) is high enough to prevent contact between the rotor blades and the tank bottom when the submersible motor agitator (4) is mounted on the upper side, wherein the base (5) is fixed by its foot to the substratum by means of at least one composite adhesive anchor (16) using a hardenable mortar compound and/or its head receives a superstructure which is fixed by means of at least one composite adhesive anchor (16) using hardenable mortar compound, wherein respective anchor rods (18) of the composite adhesive anchors (16) are inserted into anchor bores (19) in the substratum and/or in the base (5) and extend through fixing bores (20) in the base (5) and/or the superstructure, **characterised in that** mortaring (23) of the anchor rods (18) is provided both in the anchor bores (19) and in the fixing bores (20).

2. A base according to claim 1, **characterised in that** the joint (22) between the base (1) and the substratum and/or between the substratum and the superstructure is sealed by a fluid and hardenable or plastic compound at least in the region of the fixing bores (20), wherein this compound was preferably introduced before formation of the anchor bore (19).

3. A base according to either claim 1 or claim 2, **characterised in that** the fixing bores (20) are at least partly undercut.

## Revendications

1. Bâti (5) pour un agitateur à moteur submersible avec des pales rotatives, en particulier destiné à être utilisé dans des bassins d'activation et de mélange ou puisards à pompes ou similaires, avec un côté inférieur pouvant être posé sur le fond d'un bassin et un côté supérieur au niveau duquel un élément de guidage essentiellement vertical peut être fixé pour l'agitateur à moteur submersible (4), sachant que le bâti (5) est suffisamment haut pour éviter tout contact des pales avec le fond du bassin lorsque l'agitateur à moteur submersible (4) est posé sur le côté supérieur, sachant que le bâti (5) est fixé, côté socle, au support, par le biais au moins d'un boulon adhésif de liaison (16) avec une masse de mortier durcissable et/ou reçoit, côté tête, une structure fixée avec au moins un boulon adhésif de liaison (16) avec une masse de mortier durcissable, sachant qu'à chaque fois, des tiges d'ancrage (18) des boulons adhésifs de liaison (16) sont placées dans des orifices d'ancrage (19) du support et/ou du bâti (5) et qu'elles traversent des orifices de fixation (20) du bâti (5) et/ou de la structure, **caractérisé en ce qu'**il est prévu une injection (23) des tiges d'ancrage (18) aussi bien dans les orifices d'ancrage (19) que dans les orifices de fixation (20).

2. Bâti selon la revendication 1, **caractérisé en ce que** la jointure (22) entre le bâti (1) et le support et/ou entre le support et la structure est étanchée au moins dans la zone des orifices de fixation (20) avec une masse coulante et durcissable ou plastique, sachant que cette masse est mise en place de préférence avant la réalisation de l'orifice d'ancrage (19).

3. Bâti selon l'une des revendications 1 ou 2, **caractérisé en ce que** les orifices de fixation (20) sont au moins en partie contre-dépouillés.
